# EUROPEAN PATENT APPLICATION

(11) **EP 4 368 997 A1**
(43) Date of publication of application: **15.05.2024**
(21) Application number: 22837546.5
(22) Date of filing: 28.06.2022
(51) Int. Cl.: G01N 35/00

(54) **DRYING METHOD FOR REAGENT COOLING BOX**

(30) Priority: 07.07.2021 JP 2021112748
(71) Applicant: HITACHI HIGH-TECH CORPORATION, Tokyo 105-6409 (JP)
(72) Inventor: MIYAZAKI Katsumi, Tokyo 105-6409 (JP); OKUSA Takenori, Tokyo 105-6409 (JP); SUENARI Tsukasa, Tokyo 105-6409 (JP); YOKOYAMA Koki, Tokyo 105-6409 (JP)
(74) Representative: Strehl Schübel-Hopf & Partner
(86) International application number: PCT/JP2022/025826
(87) International publication number: WO 2023/282130

(57) **Abstract**

To efficiently dry the reagent refrigerator, the reagent refrigerator (1) includes a reagent disc (101) that forms a reagent container holder (102) as a space for holding the reagent container, an inner wall (103) disposed while being kept apart from the reagent disc (101) by a predetermined distance, and a lid (150) for closing the upper part of the reagent refrigerator (1). The reagent disc (101) has a hole (104) formed in the bottom surface of the reagent container holder (102), a first surface (101A) along a vertical direction, and a second surface (101B) formed along a horizontal direction. The lid (150) includes a reagent aspiration hole (153) through which a reagent aspiration nozzle (202a) is inserted for aspirating the reagent, and an openable lid (152) for opening and closing an opening (151). The warm air is introduced at a predetermined angle so that the introduced warm air is split into the one along the first surface (101A) and the one along the second surface (101B).

## Description

### Technical Field

The present invention relates to a method of drying a reagent refrigerator.

### Background Art

An automatic analyzer is an apparatus that automatically analyzes blood and another biological sample and outputs a result, and is essential in a hospital and a medical testing facility.

In such an automatic analyzer, a reagent to be used for reaction is dispensed into a container for each reagent, and the container is placed in a reagent installation section in a reagent refrigerator. Since the reagent is stably stored in the reagent refrigerator and cooled to a temperature of about 5 to 12 °C, for example.

In an automatic analyzer, since the reagent is aspirated from the inside of the reagent container installed in the reagent refrigerator in general, a through-hole for reagent aspiration is disposed in the reagent refrigerator. A technique for suppressing the occurrence of condensation caused by this is disclosed in Patent Literature 1.

### Citation List

### Patent Literature

Patent Literature 1: Japanese Unexamined Patent Application Publication No. 2013-185980

### Summary of Invention

### Technical Problem

In a reagent refrigerator described in Patent Literature 1, water may be included in air introduced in the reagent refrigerator from a cold air introduction path during the stop of an automatic analyzer after shipment inspection or during operation performed at the time of long-term storage for field maintenance. In such a case, condensation may occur in the reagent refrigerator, condensed water may stay on a bottom surface of an inner wall of the reagent refrigerator and may be left for a long time, and thus it is desirable that the condensed water be removed. Therefore, in general, a method is conceivable, in which the inside of the reagent refrigerator is opened, exposed to the outside air, and dried naturally, or the automatic analyzer is disassembled and condensed water is removed by manually wiping the inside of the reagent refrigerator. However, in the former case, a time period for the drying needs to be long, and it is difficult to visually check whether the condensed water was completely removed from the bottom surface of the inner wall in the reagent refrigerator. In addition, in the latter case, there is a possibility that a component may be missing or damaged when the automatic analyzer is disassembled.

An object of the present invention is to efficiently dry a reagent refrigerator.

### Solution to Problem

According to the present invention, a method of drying a reagent refrigerator with a heat-insulation structure for storing a plurality of reagent containers containing a reagent while having the reagent containers kept cold includes supplying warm air at a temperature higher than a temperature of an inside of the reagent refrigerator such that the warm air circulates in the reagent refrigerator.

Other solutions will be described as appropriate in embodiments.

### Advantageous Effects of Invention

It is possible to efficiently dry a reagent refrigerator.

### Brief Description of Drawings

[Fig. 1] Fig. 1 is a plan view of an overall structure of an automatic analyzer.
[Fig. 2] Fig. 2 is a vertical sectional view schematically showing a structure of a reagent refrigerator according to a first embodiment.
[Fig. 3] Fig. 3 is a vertical sectional view of the reagent refrigerator according to the first embodiment, indicating the warm air flow.
[Fig. 4] Fig. 4 is a horizontal sectional view of the reagent refrigerator according to the first embodiment, indicating the warm air flow.
[Fig. 5] Fig. 5 is a perspective view illustrating a specific inner structure of the reagent refrigerator when seen from an opening/closing portion of an openable lid.
[Fig. 6] Fig. 6 is a vertical sectional view of a reagent refrigerator according to a second embodiment, indicating a warm air flow.
[Fig. 7] Fig. 7 is a vertical sectional view of a reagent refrigerator according to a third embodiment, indicating a warm air flow.
[Fig. 8] Fig. 8 is a plane sectional view of the reagent refrigerator according to the third embodiment, indicating the warm air flow.
[Fig. 9] Fig. 9 is a horizontal sectional view of the reagent refrigerator according to a fourth embodiment, indicating a warm air flow in the third embodiment.
[Fig. 10] Fig. 10 is a view of a hardware structure of a control device used in the first to the fourth embodiments.

### Description of Embodiments

Next, embodiments for implementing the present invention will be described as appropriate with reference to the drawings. In the present embodiment, a method of drying a reagent refrigerator will be described.

The embodiments of the present invention will be described with reference to the drawings.

### First Embodiment

### [Automatic Analyzer 200]

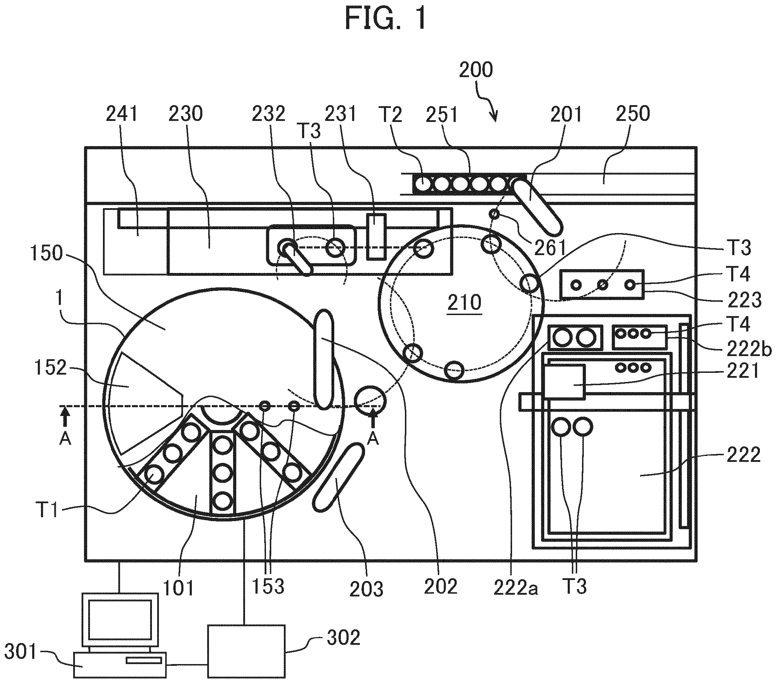

First, with reference to Fig. 1, an overview of an overall structure of an automatic analyzer 200 used in the present embodiment will be described.

Fig. 1 is a plan view of the overall structure of the automatic analyzer 200 used in the present embodiment.

The automatic analyzer 200 is an apparatus that measures a reaction solution obtained by reacting a sample with a reagent.

The automatic analyzer 200 includes a reagent refrigerator 1, a sample dispensing section 201, a reaction table 210, a reaction container conveying unit 221, a sample dispensing tip/reaction container holder 222. The automatic analyzer 200 further includes a reagent dispensing section 202, a reagent stirring section 203, a processing section 230, a detector 241, a rack conveyance line 250, a control device 301, and a temperature control device 302. The automatic analyzer 200 further includes a sample dispensing tip disposal port 261.

In a process (analysis process) of analyzing a sample, a user installs a reagent container T1 necessary for the analysis in the reagent refrigerator 1. To remove a droplet caused by condensation that occurred in the reagent refrigerator 1, an analysis operation of the automatic analyzer 200 is in a stopped state in a process (drying process) of drying the reagent refrigerator 1 in the present embodiment, and the reagent container T1 is removed by the user from the reagent refrigerator 1.

The rack conveyance line 250 is a line for conveying a rack 251 to a sample dispensing position or the like. In the rack 251, a plurality of sample containers T2 containing a sample dispensed can be installed. When the rack 251 reaches the sample dispensing position, the sample dispensing section 201 aspirates a sample dispensed in a sample container T2 and discharges the sample into a reaction container T3 placed on the reaction table 210.

The sample dispensing tip/reaction container holder 222 stores a disposable sample dispensing tip T4 used for dispensing a sample and the reaction container T3. In the example illustrated in Fig. 1, the reaction container T3 is stored on the left side of the sample dispensing tip/reaction container holder 222, and the sample dispensing tip T4 is stored on the right side of the sample dispensing tip/reaction container holder 222.

The reaction container conveying unit 221 conveys the reaction container T3 to a reaction container primary stock 222a and further conveys the reaction container T3 from the reaction container primary stock 222a to the reaction table 210. The sample dispensing tip T4 is conveyed by the reaction container conveying unit 221 to a tip primary stock 222b and further conveyed by the reaction container conveying unit 221 to a tip attachment unit 223. After the sample dispensing tip T4 is attached to the sample dispensing section 201 at the tip attachment unit 223, the sample dispensing section 201 aspirates the sample from the sample container T2 installed in the rack 251 and discharges the sample into the reaction container T3 placed on the reaction table 210.

The reagent refrigerator 1 stores reagent containers T1 containing a reagent dispensed. As illustrated in Fig. 1, three reagent containers T1 are used as one set. During the analysis process, the reagent is contained in the reagent container T1 and cooled by the reagent refrigerator 1 so as to be stably stored. The reagent refrigerator 1 has a reagent disc 101 on which reagent containers T1 are stored. The reagent refrigerator 1 has a heat insulation function of keeping the inside of the reagent refrigerator at a fixed temperature. Each reagent container T1 can be accessed by the user when the user opens an openable lid 152 disposed on a lid 150 of the reagent refrigerator 1. A reagent aspiration hole 153 that is a hole for reagent aspiration is disposed in a part of the lid 150. Each configuration of the reagent refrigerator 1 will be described below.

The reagent dispensing section 202 aspirates the reagent contained in the reagent container T1 through the reagent aspiration hole 153 and discharges the reagent into the reaction container T3. In each of the reagent containers T1 stored on the reagent disc 101, various assay reagents to be used to analyze a sample are contained as reagents.

The reaction table 210 is a disk for reacting a sample with a reagent at constant temperature. The reaction of the sample with the reagent is promoted by keeping the temperature of the reaction table 210 at a predetermined temperature by a heater (not illustrated). A plurality of reaction containers T3 are held on the reaction table 210. In the reaction containers T3, the sample and the reagent are mixed and reacted.

The processing section 230 performs pre-analysis processing on the sample by the detector 241. The reaction container T3 that is set on the reaction table 210 and in which the reaction is completed is conveyed by the conveying unit 231 to the processing section 230. Thereafter, in a state in which magnetic particles are captured by a preprocessing cleaning mechanism 232 using a magnet, the reaction solution is discharged from the reaction container T3 and a buffer solution is dispensed. Then, the reaction container T3 is conveyed by the conveying unit 231 to the detector 241.

The detector 241 detects a component or the like in liquid in which the reaction is completed in the reaction container T3. The control device 301 controls various operations of each component of the automatic analyzer 200 and performs arithmetic processing of calculating a density of a predetermined component in the sample from a result of the detection performed by the detector 241. In addition, the control device 301 is connected to the temperature control device 302 that controls the temperature of the reagent refrigerator 1.

The used sample dispensing tip T4 is discarded to the sample dispensing tip disposal port 261.

### First Embodiment

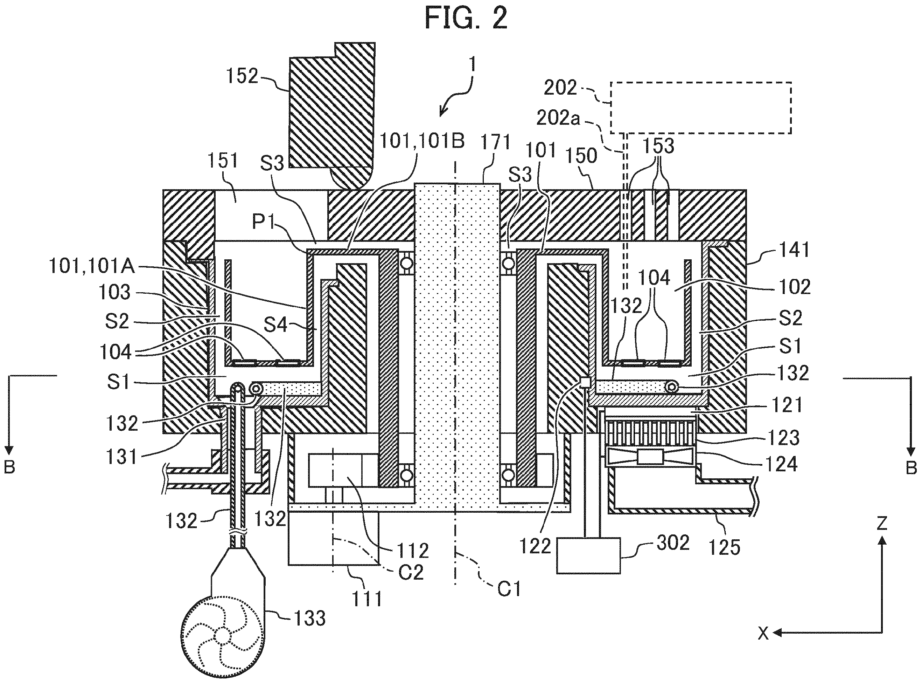

Next, the reagent refrigerator 1 according to the first embodiment is described with reference to Figs. 2 to 5. Fig. 1 will be referred to in the description of Figs. 2 to 5 as appropriate.

### [Reagent Refrigerator 1]

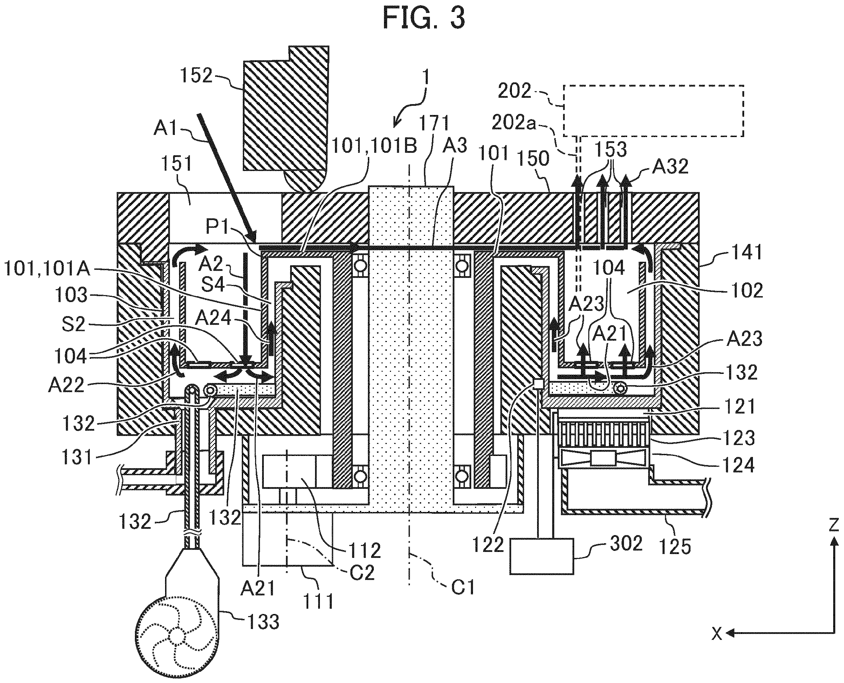

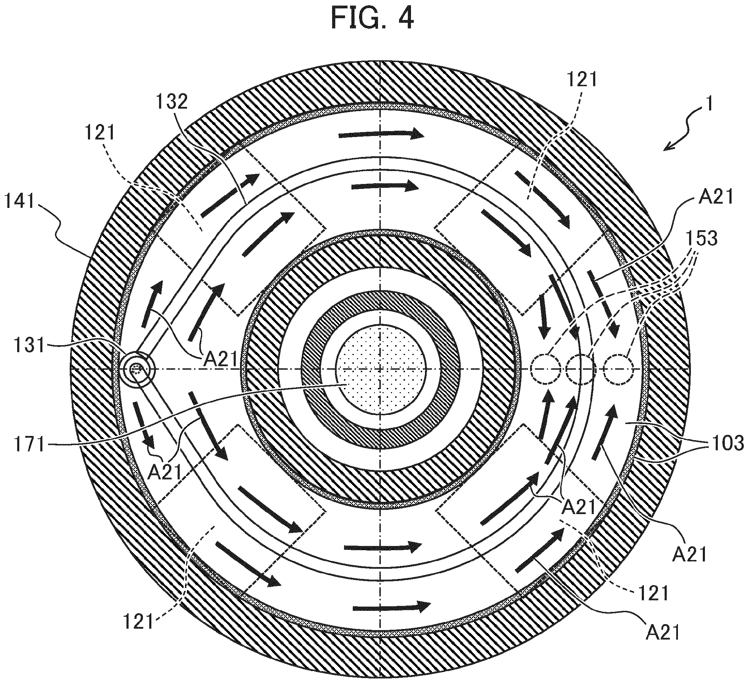

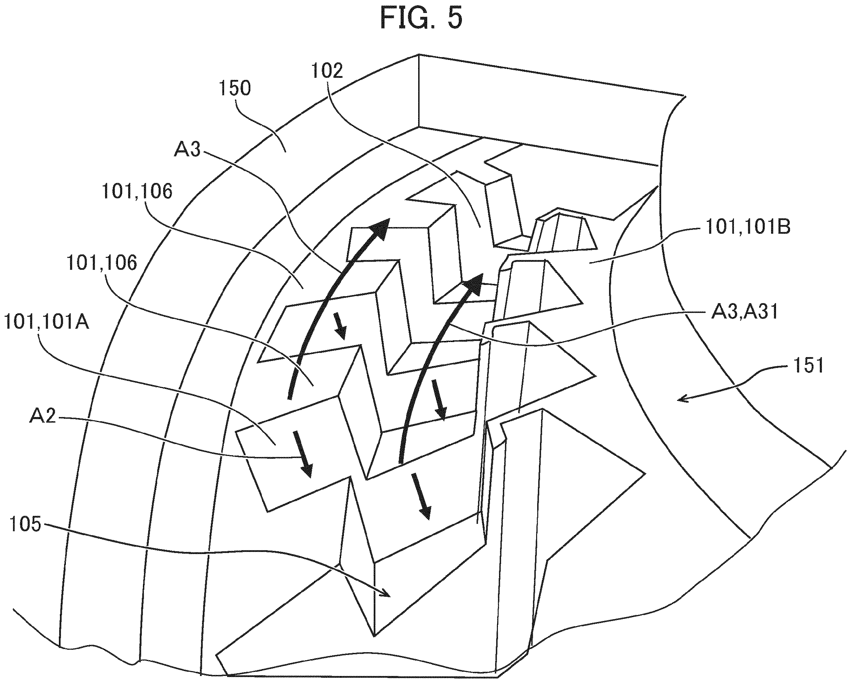

Fig. 2 is a vertical sectional view schematically showing a structure of the reagent refrigerator 1 according to the first embodiment. Fig. 3 is a vertical sectional view of the reagent refrigerator 1 according to the first embodiment, illustrating flows of warm air. Fig. 4 is a horizontal sectional view of the reagent refrigerator 1 according to the first embodiment, illustrating flows of warm air. Fig. 5 is a perspective view illustrating a specific inner structure of the reagent refrigerator 1 as viewed from an opening/closing portion 151 of the openable lid 152 illustrated in Fig. 3. Figs. 2 and 3 illustrate cross-sectional views taken along line A-A in Fig. 1, and Fig. 4 illustrates a cross-sectional view taken along line B-B in Fig. 2.

The structure of the reagent refrigerator 1 is described with reference to Fig. 2.

As illustrated in Fig. 2, the reagent refrigerator 1 includes the reagent disc 101, an inner wall 103, and a heat insulation material 141. The reagent refrigerator 1 further includes a motor 111 and a drive unit 112 as a rotation drive system. The reagent refrigerator 1 further includes heat exchangers 121, a temperature sensor 122, a heat sink 123, a fan 124, and a duct 125 as a cooling system. The reagent refrigerator 1 further includes a drain 131, a pipe 131, a pipe 132, and an air blower 133 as the cooling system.

The reagent refrigerator 1 has a cylindrical shape as a whole as illustrated in Figs. 1 and 2. As illustrated in Fig. 2, the reagent disc 101 is installed in the reagent refrigerator 1. The reagent disc 101 is formed in a circular shape in a plan view. As illustrated in Fig. 2, the reagent disc 101 has a substantially S-shaped cross section. That is, the cross section of the reagent disc 101 is formed of a U-shaped member. A spatial section of a U-shaped portion is formed to be oriented toward an upper side (Z direction). A reagent container holder 102 in which the reagent container T1 (see Fig. 1) is held is formed in a space formed by the U-shaped portion. The shape of the reagent refrigerator 1 is arbitrary. As illustrated in Fig. 1, in the present embodiment, it is desirable that the reagent refrigerator 1 be formed in a cylindrical shape such that a distance from the inner wall 103 of the reagent refrigerator 1 on the same circle is equal. The plurality of reagent containers T1 are held radially along the circumferential direction inside the reagent refrigerator 1 by the reagent container holder 102 (see Fig. 1). The inner wall 103 is disposed around the reagent container holder 102 so as to cover the lower side, the inside, and the outer side of the reagent holder. A predetermined distance is provided between the inner wall 103 and the reagent container holder 102. An opening hole 104 is disposed in a bottom surface of the reagent disc 101. The opening hole 104 will be described later.

As illustrated in Fig. 2, a gap space S1 is formed between the bottom surface of the reagent disc 101 and a bottom surface of the inner wall 103. A gap space S2 and a gap space S4 are formed between a side surface of the reagent disc 101 and a side surface of the inner wall 103.

### (Rotation Drive System)

The reagent disc 101 is connected to a central shaft 171 (not illustrated). The central shaft 171 has a cylindrical shape or a conical shape and is disposed at the center of the reagent refrigerator 1.

In the analysis process, when the motor 111 disposed outside the reagent refrigerator 1 rotates around a rotational axis C2, the rotation of the motor 111 is transferred to the reagent disc 101 via the drive unit 112. Therefore, the reagent disc 101 rotates around a rotational axis C1.

### (Cooling System)

As described above, in the reagent refrigerator 1, the heat exchangers 121, the temperature sensor 122, the heat sink 123, the fan 124, the duct 125, the drain 131, the pipe 132, and the air blower 133 form the cooling system. The cooling system cools the reagent (reagent containers T1 (see Fig. 1)) during the analysis process. In addition, the temperature of the cooling system is controlled by the temperature control device 302. Specifically, the temperature control device 302 controls operations of the heat exchangers 121 and the fan 124 to manage the temperature of the reagent refrigerator 1. As illustrated in Fig. 4, the plurality (four in the example in Fig. 4) of heat exchangers 121 are disposed in the circumferential direction of the inner wall 103. In addition, as illustrated in Fig. 4, the pipe 132 is disposed to pass over all of the heat exchangers 121 disposed. The cooling system will be described later in detail. In Figs. 2 and 3, the position of a discharge port of the pipe 132 is shifted from that in Fig. 4 for easier viewing. In Fig. 3, the diameter of the drain 131 is enlarged for easier viewing.

### (Heat Insulation Structure)

As illustrated in Fig. 2, the heat insulation material 141 is disposed around the inner wall 103. The reagent refrigerator 1 is insulated by the heat insulation material 141 and has a structure that prevents heat inside the reagent refrigerator 1 from escaping to the outside. It is desirable that the heat insulation material 141 be made of a material with low thermal conductivity, such as foamed polystyrene or foamed polyurethane.

### (Lid 150)

The lid 150 is disposed above the reagent disc 101. The lid 150 has the opening/closing portion 151. The opening/closing portion 151 can be opened and closed by the openable lid 152. The user opens the openable lid 152 to replace a reagent container T1 (see Fig. 1) from the opening/closing portion 151. The lid 150 and the openable lid 152 are made of the same heat insulation member as the heat insulation material 141 and are formed to prevent heat inside the reagent refrigerator 1 from escaping to the outside.

As illustrated in Fig. 2, the reagent aspiration hole 153 is formed in the lid 150, and the outside air and the inside of the reagent refrigerator 1 communicate with each other through the reagent aspiration hole 153. That is, the reagent aspiration hole 153 through which a reagent dispensing nozzle 202a disposed in the reagent dispensing section 202 can pass is formed in the lid 150. The inside of the reagent refrigerator 1 communicates with the outside of the reagent refrigerator 1 through the reagent aspiration hole 153. When the reagent dispensing nozzle 202a is inserted in the reagent aspiration hole 153, the reagent dispensing section 202 aspirates the reagent from the reagent container T1 held in the reagent container holder 102. In the example illustrated in Figs. 1, 3, and 4, the three reagent aspiration holes 153 are provided, but the number of reagent aspiration holes 153 is not limited to three.

As illustrated in Fig. 2, a gap space S3 is formed between the lid 150 and the reagent disc 101.

### (Structure of Reagent Disc 101)

The reagent disc 101 has a first surface 101A along the vertical direction (Z direction), and a second surface 101B (along the horizontal direction (X direction)) orthogonal to the first surface 101 A. As illustrated in Fig. 2, the second surface 101B forms a part of the reagent container holder 102.

As illustrated in Fig. 5, the reagent container holder 102 is partitioned by a partition 106 disposed in the reagent disc 101.

In addition, as illustrated in Fig. 5, in the reagent disc 101, a recess portion 105 is formed at an upper portion of the partition 106 that partitions the reagent container holder 102. As illustrated in Fig. 5, the recess portion 105 is continuously disposed in an annular manner on an upper surface of the reagent disc 101. In the example illustrated in Fig. 5, the recess portion 105 has a U-shaped step shape, but is not limited thereto. The recess portion 105 may have a substantially semicircular shape, a substantially semielliptical shape, or the like. The upper portion of the reagent disc 101 is a portion facing the lid 150.

### (Drying Process)

Next, a drying process is described mainly with reference to Figs. 3 and 4 and with reference to Figs. 2 and 5 as appropriate. As described above, Fig. 3 is a diagram illustrating airflow added to Fig. 2. Therefore, in Fig. 3, each structure of the reagent refrigerator 1 is similar to that in Fig. 2, and the same reference signs as those in Fig. 2 are given for the same structures as those in Fig. 2 (however, the gap spaces S1 to S4 are omitted in Fig. 3).

In the first embodiment, as illustrated in Fig. 3, a method of drying the reagent refrigerator 1 to dry the inside of the reagent refrigerator 1 by causing warm air to flow into the reagent refrigerator 1 from the opening/closing portion 151 (arrow A1) is proposed.

To perform the drying, an analysis operation of the automatic analyzer 200 is stopped and the reagent containers T1 (see Fig. 1) are removed.

In addition, the openable lid 152 is opened by the user and warm air is introduced into the reagent refrigerator 1 through the opening/closing portion 151 from the outside of the reagent refrigerator 1 (arrow A1). The temperature of the warm air is approximately 40 °C, but is not limited thereto.

As illustrated in Fig. 3, the warm air is blown such that the flow direction of the warm air is inclined at a predetermined angle with respect to the horizontal direction of the reagent disc 101.

It is desirable that the warm air introduced in the reagent refrigerator 1 be dry air generated by a heating device (not illustrated) such as a heater and having low humidity at a temperature higher than that of the outside air. For example, the warm air may be introduced into the reagent refrigerator 1 by inserting an end of a hose (not illustrated) having the other end connected to the heating device (not illustrated) into the opening/closing portion 151.

More specifically, it is preferable that the warm air (arrow A1) be at a temperature higher than that of the inside of the reagent refrigerator 1. In addition, it is preferable that the warm air (arrow A1) have a dew point temperature such that the warm air is not condensed even when the warm air is cooled by being introduced into the reagent refrigerator 1, but it suffices for the warm air to be able to dry the inside of the reagent refrigerator 1.

As illustrated in Fig. 3, the warm air hits a portion P1 where the first surface 101A and the second surface 101B intersect each other. As a result, a flow of air is formed, which branches in two directions, the horizontal direction (x direction) and the vertical direction (z direction) with respect to the reagent refrigerator 1. The air (warm air) flowing along the first surface 101A out of the air flowing in the two directions is indicated by an arrow A2. In addition, the air (warm air) flowing along the second surface 101B is indicated by an arrow A3.

The warm air (arrow A2) flowing along a wall surface of the first surface 101A along the vertical direction flows toward a bottom surface of the reagent container holder 102. Most of the warm air passes through the opening hole 104 and reaches the bottom surface of the inner wall 103. As illustrated in Fig. 4, the warm air that reached the bottom surface of the inner wall 103 flows along the bottom surface of the inner wall 103 in the gap space S1 (see Fig. 2) and branches into warm air (arrow A21) in the clockwise direction on the paper sheet and warm air (arrow A21) in the counterclockwise direction on the paper sheet. The warm air flows toward a side where fluid resistance is low. However, in this case, since there is not a large difference in fluid parallelism in the clockwise direction and the counterclockwise direction, the warm air in substantially equal amounts flows in the directions. That is, the warm air (arrow A21) flows to circulate along the circumferential direction of the inner wall 103. Some of the warm air rises in the gap space S2 as indicated by an arrow A22, while some of the warm air rises in the gap space S4 as illustrated by an arrow A24. After the warm air indicated by the arrow A24 passes around the central shaft 171, the warm air passes through a gap portion between members and joins the warm air indicated by an arrow A3.

In addition, the rising air indicated by the arrow A22 in Fig. 3 rises toward the opening/closing portion 151, and although a part of the air leaks from the opening/closing portion 151 to the outside of the reagent refrigerator 1, most of the air joints the warm air indicated by the arrow A3, which will be described later. A side surface of the reagent refrigerator 1 can be uniformly warmed by the flows of the warm air indicated by the arrows A22, A23, and A24.

The warm air (arrow A21) flowing in the circumferential direction of the inner wall 103 in the gap space S1 heats the bottom surface of the reagent disc 101 and the overall bottom surface of the inner wall 103 while diffusing. This uniformly warms a lower space of the reagent refrigerator 1.

Since the warmed air becomes less dense and lighter, a flow of air (rising air) that rises in the vertical direction of the inner wall 103 is formed. Therefore, rising air is also generated in the warm air (arrow A21) flowing in the gap space S1 and rises inside the reagent container holder 102 through the opening hole 104, and rises in the gap space S2 and the gap space S4 (arrow A22 to A24). This rising air uniformly warms the side surface of the reagent disc 101 and the side surface of the inner wall 103. Of the warm air indicated by the arrow A23, the warm air rising in the gap space S4 passes around the central shaft 171, passes through the gap portion between the members, and joins the warm air indicated by the arrow A3.

In addition, as illustrated in Fig. 3, the warm air (arrow A3) flowing along the second surface 101B in the horizontal direction with respect to the reagent refrigerator 1 forms air circulating in the circumferential direction in the gap space S3 (see Fig. 2). The warm air (arrow A3) flowing in the gap space S3 heats the upper surface of the reagent disc 101 and an overall bottom surface of the lid 150 while diffusing in the circumferential direction. As a result, it is possible to uniformly warms an upper space of the reagent refrigerator 1.

As illustrated in Fig. 5, in a case where the second surface 101B forms the recess portion 105, the cross-sectional area of the gap space S3 can be increased due to the recess portion 105. Of the warm air (arrow A3) flowing through the gap space S3, the warm air flowing through the recess portion 105 (arrow A31 in Fig. 5) flows through a space formed in an annular shape by the recess portion 105. Therefore, the warm air indicated by the arrow A31 can circulate in the annular space formed by the recess portion 105 without obstructing the air flowing in the circumferential direction. As a result, it is possible to improve the effect of the heating. The warm air indicated by the arrow A3 is also divided into air flowing in the clockwise direction and air flowing in the counterclockwise direction, but only the air flowing in the clockwise direction is illustrated in Fig 5. It is desirable that the recess portion 105 have a cross-sectional area that allows the air indicated by the arrow A31 to flow as much as possible.

Return to the description of Fig. 3.

As described above, since the warmed air becomes less dense and lighter, rising air is formed in the warm air indicated by the arrow A3. Therefore, when the warm air indicated by the arrow A3 reaches the reagent aspiration hole 153, the warm air is discharged from the reagent aspiration hole 153 to the outside (arrow A32).

In addition, as described above, the warm air (arrow A21) flowing on a bottom portion of the inner wall 103 also rises in the gap space S2 (see Fig. 2), the gap space S4, and the reagent container holder 102 by the rising air while flowing on the bottom surface of the inner wall 103 in the circumferential direction (arrow A23). Of the warm air indicated by the arrow A23, the warm air that rises in the gap space S2 and the reagent container holder 102 joins and the like as indicated by the arrow A3 and is finally discharged from the reagent aspiration hole 153 to the outside (arrow A32).

As described above, according to the first embodiment, it is possible to easily uniformly warm the inside (upper portion, lower portion, and side surface) of the reagent refrigerator 1 without disassembling the reagent refrigerator 1. Therefore, it is possible to reduce a relative humidity in the reagent refrigerator 1 and set the inside of the reagent refrigerator 1 to a dry state within a short time period. As a result, it is possible to efficiently uniformly remove droplets generated by condensation during cooling in the reagent refrigerator 1.

In the method of drying the reagent refrigerator 1 described in the first embodiment, after shipment inspection, that is, in a state in which the automatic analyzer 200 is used by the user, the drying is performed during the stop of the automatic analyzer 200, that is, in a state in which power supply to the automatic analyzer 200 is stopped. That is, even when power is not supplied to the automatic analyzer 200, it is possible to dry the inside of the reagent refrigerator 1. In addition, according to the present embodiment, it is possible to efficiently dry the reagent refrigerator 1 without a change in the configuration of the existing reagent refrigerator 1.

In addition, according to the first embodiment, in the heating of the inside of the reagent refrigerator 1 with warm air, the temperature of the inner wall 103 can be made uniform in the vertical and horizontal directions by the circulating warm air. Therefore, it is possible to make uniform a temperature distribution in the reagent refrigerator 1. As the material of the inner wall 103, it is desirable to use a material with high thermal conductivity, such as copper or aluminum.

When the inventor naturally dried the reagent refrigerator 1 in a state in which the opening/closing portion 151 was opened, approximately 80% of droplets due to an experimentally simulated condensation state were removed in 21 hours. On the other hand, as a result of performing the drying method described in the first embodiment, droplets due to the experimentally simulated condensation state were almost completely removed within 45 minutes after introducing warm air into the reagent refrigerator 1. As described above, the inventor was able to confirm a significant improvement in the efficiency of removing droplets due to condensation according to the present embodiment.

### Second Embodiment

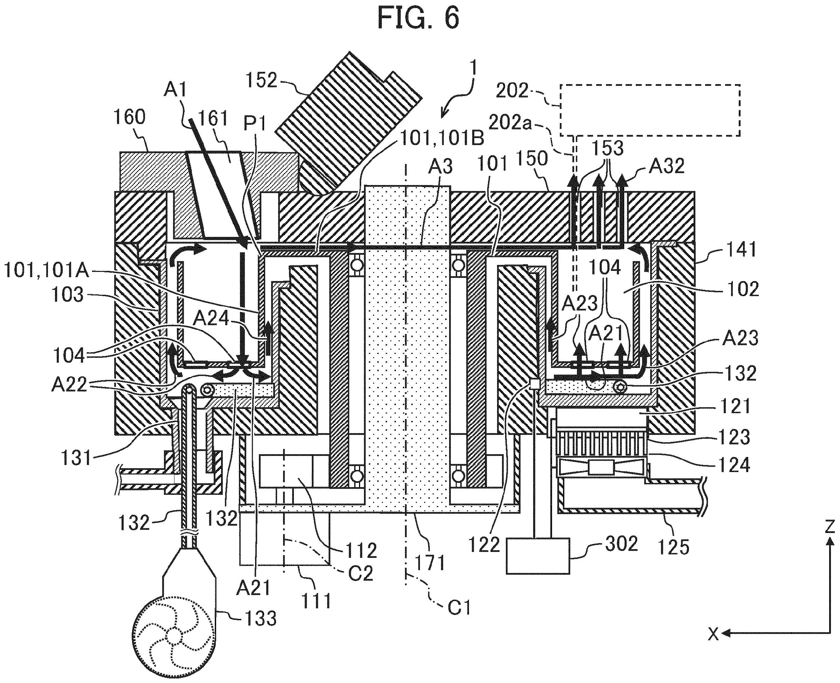

Next, a second embodiment will be described with reference to Fig. 6.

Fig. 6 is a vertical cross-sectional view of a reagent refrigerator 1, illustrating flows of warm air according to the second embodiment. In addition, Fig. 6 illustrates the cross-sectional view taken along A-A line in Fig. 1, similarly to Figs. 2 and 3. In Fig. 6, the same constituent components as those in Fig. 3 are denoted by the same reference signs as those in Fig. 3 and a description thereof is omitted.

In the second embodiment, an opening/closing portion 151 is initially opened. A warm air blower lid 160 prepared separately from the reagent refrigerator 1 is disposed on the opening/closing portion 151. A through hole 161 inclined at a predetermined angle with reference to a horizontal direction of a reagent disc 101 is disposed in the warm air blower lid 160.

For example, an end of a hose (not illustrated) having the other end connected to a heating device (not illustrated) such as a heater is set in an upper portion of the through hole 161 disposed in the warm air blower lid 160. Therefore, warm air is introduced into the reagent refrigerator 1 through the through hole 161 (arrow A1). The flow of the warm air after the introduction is similar to that in the first embodiment, and a description thereof is omitted. It is desirable that the warm air blower lid 160 have a heat insulation structure made of the same material as the heat insulation material 141.

An effect of an automatic analyzer 200 according to the second embodiment will be described. As described above, warm air introduced from the outside flows into the reagent refrigerator 1 through the through hole 161 disposed in the warm air blower lid 160 (arrow A1). In this case, it is possible to reduce an opening area of the opening/closing portion 151 by disposing the warm air blower lid 160 on the opened opening/closing portion 151. Therefore, it is possible to suppress outside air other than warm air from entering the reagent refrigerator 1. Furthermore, since it is possible to reduce the opening area of the opening/closing portion 151 by the warm air blower lid 160, it is possible to suppress the warm air introduced into the reagent refrigerator 1 from leaking from the inside of the reagent refrigerator 1 to the outside. That is, the airtightness of the reagent refrigerator 1 can be improved, and the drying can be performed more efficiently in a shorter time than that in the first embodiment.

By setting the inclination angle of the through hole 161 to an appropriate angle in advance, it is possible to apply warm air to a member P1 where a first surface 101A and a second surface 101B of the reagent disc 101 intersect without performing fine adjustment.

In addition, similarly to the first embodiment, in the second embodiment, after shipment inspection, that is, in a state in which the automatic analyzer 200 is used by a user, it is possible to dry the inside of the reagent refrigerator 1 even in a state in which power is not supplied to the automatic analyzer 200 during the stop of the automatic analyzer 200.

In the first embodiment and the second embodiment, the warm air introduced (arrows A1 in Figs. 3 and 6) is introduced toward a central shaft 171, but is not limited thereto. For example, the warm air may be introduced toward the circumferential direction of the reagent refrigerator 1 at a predetermined angle with respect to the horizontal direction.

### Third Embodiment

Next, a third embodiment will be described with reference to Figs. 2, 7, and 8. In the third embodiment, a method of drying an inside of a reagent refrigerator 1 is provided by using a structure for cooling the reagent refrigerator 1 as a structure for heating.

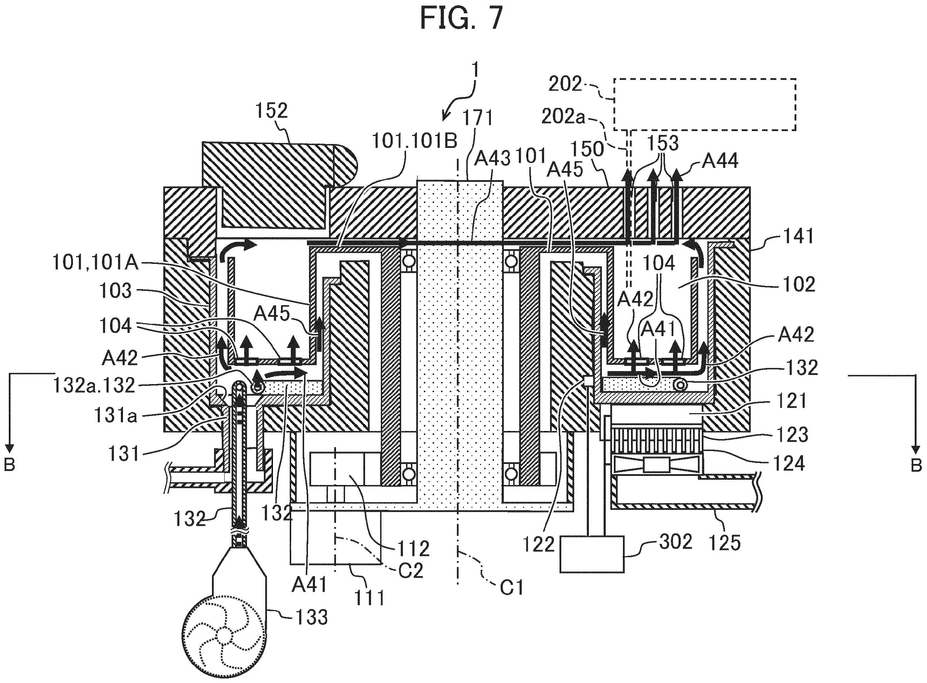

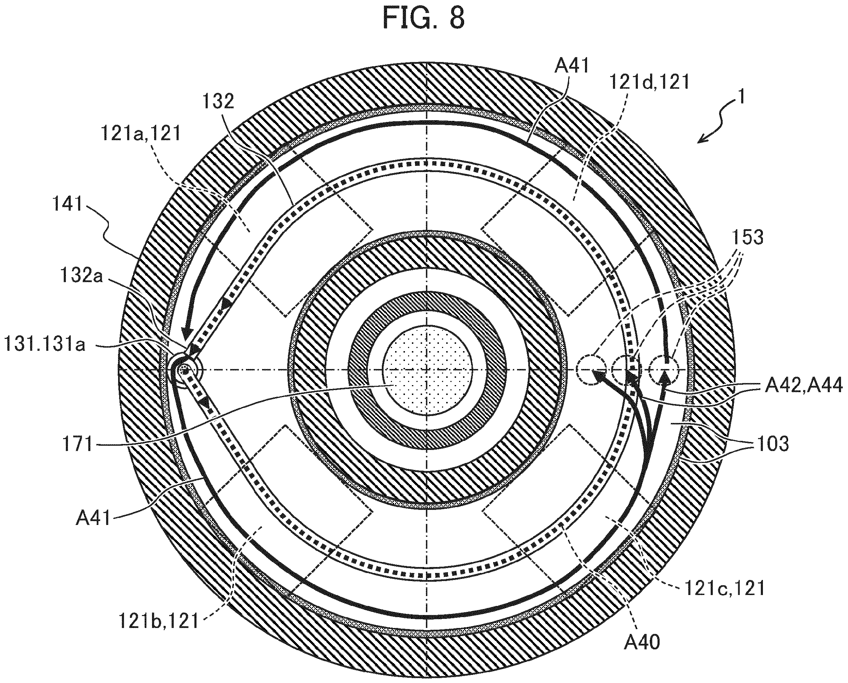

Fig. 7 is a vertical cross-sectional view of the reagent refrigerator 1, illustrating flows of warm air according to the third embodiment. Fig. 8 is a horizontal cross-sectional view of the reagent refrigerator 1, illustrating flows of warm air according to the third embodiment. Fig. 7 is a cross-sectional view taken along A-A line in Fig. 1. Fig. 8 is a cross-sectional view taken along B-B line in Fig. 7. In Figs. 7 and 8, the same structures as those in Figs. 3 and 4 are denoted by the same reference signs as those in Figs. 3 and 4, and a description thereof is omitted.

A process of drying the reagent refrigerator 1 according to the third embodiment is performed in a state in which an openable lid 152 of the reagent refrigerator 1 is closed. As illustrated in Figs. 7 and 8, a plurality of heat exchangers 121a to 121d (121) are arranged in a circumferential direction on a lower side of a bottom surface of an inner wall 103. In Fig. 7, the heat exchangers 121 are illustrated only on the right side of the paper sheet, but are not illustrated on the left side of the paper sheet in order to explain structures of a drain 131, a pipe 132, and the like for convenience. The pipe 132 has an end connected to an air blower 133. In addition, the drain 131 is disposed such that a gap space S1 (see Fig. 2) communicates with the outside of the reagent refrigerator 1. The pipe 132 is installed in the drain 131 and is drawn into the reagent refrigerator 1 from the outside of the reagent refrigerator 1. The drain 131 is opened at a bottom portion of the inner wall 103 (upper opening portion 131a). As described below, water droplets caused by cooling are discharged from a pipe discharge port 132a that is an end of the pipe 132. The drain 131 has a function of discharging water droplets discharged from the pipe discharge port 132a to the outside of the reagent refrigerator 1. In Fig. 7, the position of the pipe discharge port 132a is shifted from that in Fig. 8 for easier viewing.

In addition, as described above, as illustrated in Fig. 7, the pipe 132 is installed in the drain 131 such that the pipe 132 penetrates the bottom surface of the inner wall 103 from a part where the heat exchangers 121 are not disposed and is drawn into the reagent refrigerator 1. As illustrated in Fig. 8, a path of the pipe 132 is disposed on the bottom surface of the inner wall 103 and extends around a central shaft 171 of a reagent disc 101. Therefore, as illustrated in Fig. 8, the pipe 132 passes over all the heat exchangers 121a to 121d.

Particularly, since the pipe 132 passes on the inner diameter side of the drain 131 and is drawn into the reagent refrigerator 1, there is an advantage that another hole does not need to be disposed in the inner wall 103. That is, by using the same hole as a discharge port for water droplets discharged from the pipe discharge port 132a and an introduction port for outside air, the number of holes through which the inside of the reagent refrigerator 1 communicates with the outside of the reagent refrigerator 1 can be reduced. This can improve the airtightness of the reagent refrigerator 1. The same hole can drain water droplets discharged from the pipe discharge port 132a and introduce outside air. The installment of the pipe 132 will be described below.

### (Cooling and Heating of Inner Wall 103)

As illustrated in Fig. 7, the temperature of each of the heat exchangers 121 is measured by a temperature sensor 122 attached in the vicinity of each of the heat exchangers 121. A temperature control device 302 illustrated in Fig. 7 adjusts the temperature of each of the heat exchangers 121 to a preset temperature based on the temperatures measured by the temperature sensor 122. In an analysis process, the inside of the reagent refrigerator 1 is cooled by setting the temperatures of the heat exchangers 121 to be low, that is, by using the heat exchangers 121 as coolers. In this case, the inner wall 103 is directly cooled by the heat exchangers 121 attached outside the inner wall 103. As described below, during the cooling, cooling using the pipe 132 is also performed.

On the other hand, in a drying process, the inner wall 103 is heated. In this case, the temperatures of the heat exchangers 121 are set to be high such that the inner wall 103 of the reagent refrigerator 1 is heated by the heated inner wall 103. That is, the cooling and heating of the inner wall 103 are switched by changing the temperatures of the heat exchangers 121 according to the use in advance. In other words, the heat exchangers 121 that are used as coolers in the analysis process are used as heaters to dry the inside of the reagent refrigerator 1. As each of the heat exchangers 121, a heat exchanger that absorbs heat from one surface and radiates heat from the other surface by applying a current, such as a Peltier element, is used. In addition, as described below, in the drying process, the pipe 132 is heated by the heat exchangers 121, whereby warm air is discharged from the pipe 132.

That is, in a process of analyzing a sample, the heat exchangers 121 absorb heat in the reagent refrigerator 1 and radiate heat to the outside of the reagent refrigerator 1, and thus function as coolers that cool the inside of the reagent refrigerator 1. In the drying process, the heat exchangers 121 absorb heat outside the reagent refrigerator 1 and radiate the heat to the inside of the reagent refrigerator 1, and thus function as heaters that heat the inside of the reagent refrigerator 1. As illustrated in Fig. 7, in each of the heat exchangers 121, a heat sink 123 is disposed on the opposite side to the inner wall 103, and an extended heating surface is formed. In addition, a fan 124 is formed in the vicinity of the heat sink 123. During the cooling, heat of the heat sink 123 is discharged to a duct 125 by forced convection by the fan 124. The duct 125 is a flow path communicating with the outside of the automatic analyzer 200.

### (Pipe 132)

As described above, the pipe 132 penetrates through the heat insulation material 141 and the inner wall 103 of the reagent refrigerator 1 and is introduced into the reagent refrigerator 1 from the outside of the reagent refrigerator 1 (see Fig. 7). As described above, the pipe 132 is arranged in a substantially circular shape along the bottom surface of the inner wall 103 of the reagent refrigerator 1 (see Fig. 8). As illustrated in Fig. 8, the pipe discharge port 132a located at the end of the pipe 132 is formed toward the upper opening portion 131a that is an end of the drain 131. In addition, the pipe 132 may be arranged such that the vertical projection of the pipe discharge port 132a is present in a range of the upper opening portion 131a of the drain 131. That is, the pipe discharge port 132a may be present on the upper opening portion 131a of the drain 131.

As illustrated in Figs. 7 and 8, outside air is sent into the pipe 132 by the air blower 133. The outside air introduced into the reagent refrigerator 1 flows in the pipe 132 and is blown out from the pipe discharge port 132a. During the cooling in the analysis process, since the heat exchangers 121 are used as coolers, the outside air flowing in the pipe 132 is cooled by each of the heat exchangers 121 (121a to 121d). Specifically, the outside air flowing in the pipe 132 is cooled via the inner wall 103 cooled by each of the heat exchangers 121. Therefore, the cooled air is blown out from the pipe discharge port 132a. In this case, during the cooling described below, water droplets caused by condensation that occurred in the pipe 132 are discharged from the pipe discharge port 132a. As described above, the discharged water droplets are discharged to the outside of the reagent refrigerator 1 through the drain 131 (see Fig. 7). The inside of the reagent refrigerator 1 is cooled by the cool air blown out from the pipe 132 and the inner wall 103 cooled by the heat exchangers 121.

In addition, the drying of the reagent refrigerator 1 using the pipe 132 in the drying process will be described later.

The pipe 132 is directly attached to the bottom surface of the inner wall 103 and cooled in the analysis process and heated in the drying process.

As the air blower 133, for example, a diaphragm pump, a centrifugal fan, a piezo fan, and the like can be used. In addition, it is desirable that a filter or the like not illustrated be installed before introduction of outside air to prevent dust and bacteria from entering the reagent refrigerator 1. The filter is generally provided in the air blower 133.

### (Drying by Pipe 132)

The drying process according to the third embodiment will be described.

In the drying process, outside air introduced into the pipe 132 by the air blower 133 flows in the pipe 132 disposed on the bottom surface of the inner wall 103 (dotted line A40 in Fig. 8). Then, the outside air is sufficiently heated by each of the heat exchangers 121 (21a to 121d) when passing through the pipe 132 (see Fig. 8). Specifically, the outside air flowing in the pipe 132 is heated via the inner wall 103 heated by each of the heat exchangers 121. Therefore, the outside air discharged from the pipe discharge port 132a becomes warm air. That is, dry air with reduced relative humidity is discharged from the pipe discharge port 132a into the gap space S1 (see Fig. 2). The warm air discharged to the gap space S1 (see Fig. 2) forms air circulating in the circumferential direction in the gap space S1 (see Fig. 2) (arrows A41 in Figs. 7 and 8). The inside of the reagent refrigerator 1 is heated by the warm air blown out from the pipe 132 and the inner wall 103 heated by the heat exchangers 121.

The warm air (arrows A41 in Figs. 7 and 8) flowing in the gap space S1 (see Fig. 2) heats a bottom surface of the reagent disc 101 and the overall bottom surface of the inner wall 103 while diffusing in the circumferential direction. Therefore, it is possible to uniformly warm a lower portion of the reagent refrigerator 1. Since the warmed air becomes less dense and lighter, a flow of air (rising air) that rises in the vertical direction of the inner wall 103 is formed (arrows A42 and A45 in Fig. 7). By the rising air, the side surface of the reagent refrigerator 1 can be uniformly warmed. As illustrated in Fig. 7, a part of the rising air indicated by the arrow A42 passes through an opening hole 104 opened on a bottom surface of a reagent container holder 102 and reaches an upper portion of the reagent refrigerator 1 through the reagent container holder 102. Alternatively, the remaining part of the rising air indicated by the arrow A42 flows in a gap space S2 (see Fig. 2) and reaches the upper portion of the reagent refrigerator 1. The warm air that reached the upper portion of the reagent refrigerator 1 flows along a second surface 101B along the horizontal direction of the reagent disc 101 (arrow A43 in Fig. 7). Then, the warm air (arrow A43 in Fig. 47) flowing along the second surface 101B circulates in the circumferential direction of the reagent refrigerator 1 while diffusing in a gap space S3 (see Fig. 2). Therefore, an upper surface of the reagent disc 101 and an overall bottom surface of a lid 150 are uniformly heated. As a result, it is possible to uniformly warm the upper portion of the reagent refrigerator 1. After warm air indicated by an arrow A45 passes around the central shaft 171, the warm air passes through a gap portion between members and joins the warm air indicated by the arrow A43.

Thereafter, the warm air (arrow A43 in Fig. 7) flowing along the second surface 101B is discharged from a reagent aspiration hole 153 to the outside (arrow A44 in Fig. 7). Of the warm air indicated by the arrow A42, warm air that does not join the warm air indicated by the arrow A43 is discharged from the reagent aspiration hole 153 to the outside (arrow A44 in Fig. 7).

In addition, in addition to heating by the warm air discharged from the pipe 132, droplets are dried by directly heating the bottom portion of the inner wall 103 by the heat exchangers 121 as described above.

Pressure loss increases as the flow path of the pipe 132 becomes longer. Therefore, it is desirable that the air blower 133 that introduces the outside air into the pipe 132 be able to blow air even in an environment in which pressure loss in the pipe 132 is high. In addition, it is desirable that the flow rate of the outside air introduced into the reagent refrigerator 1 be higher than that of the outside air that enters the reagent refrigerator 1 through the reagent aspiration hole 153 in the analysis process or that of outside air that leaks to the outside of the reagent refrigerator 1 through the reagent aspiration hole 153. That is, the air blower 133 blows air in an amount that can pass through the pipe 132 and can be discharged from the reagent aspiration hole 153 to the outside.

However, in order to reduce the amount of heat lost by introducing outside air and increase the heat exchange efficiency, it is desirable not to increase the amount of outside air introduced more than necessary. That is, when the flow rate of outside air flowing in the pipe 132 is high, the efficiency of the heat exchange (cooling, heating) by the heat exchangers 121 decreases. Therefore, the flow rate of the air blower 133 is adjusted such that the flow rate is high enough to allow the heat exchange by the heat exchangers 121 to be performed appropriately.

The cross-sectional shape of the pipe 132 can be changed, for example, into a rectangular, circular, or trapezoidal shape. The number of pipes 132 does not need to be one; for example, a plurality of pipes 132 may be installed, and a plurality of pipe discharge ports 132a may be present for one pipe 132. The presence of a plurality of pipe discharge ports 132a for one pipe 132 means that one pipe 132 branches in the middle and a plurality of pipe discharge ports 132a are present. The material of the pipe 132 is preferably a material with high thermal conductivity, such as copper or aluminum. In this case, the efficiency of cooling or heating the pipe 132 by the heat exchangers 121 via the inner wall 103 can be improved.

As described above, by uniformly warming the upper portion, the side surface, and the lower portion of the reagent refrigerator 1, the relative humidity inside the reagent refrigerator 1 can be lowered. Therefore, the inside of the reagent refrigerator 1 can be brought into a dry state within a short time period. As a result, it is possible to efficiently remove droplets caused by condensation that has occurred. Particularly, in the third embodiment, the structure used as a cooling system in the analysis process is used as a heating system in the drying process. Therefore, it is possible to dry the inside of the reagent refrigerator 1 without additionally providing a device for drying. It is desirable that the outside air introduced by the air blower 133 be dry air with as low humidity as possible. In addition, it is possible to further promote drying by setting the set temperatures of the heat exchangers 121 to a high temperature. Furthermore, in the third embodiment, the inside of the reagent refrigerator 1 can be dried without disassembling the automatic analyzer 200 for long-term storage in field maintenance in particular and without introducing warm air by the heating devices disposed outside the reagent refrigerator 1 in the first and second embodiments.

In addition, it is preferable that warm air by the heat exchangers 121 be at a temperature higher than that of the inside of the reagent refrigerator 1. Furthermore, it is preferable that the warm air have a dew point temperature such that the warm air is not condensed even when the warm air is cooled by being introduced into the reagent refrigerator 1, but it suffices for the warm air to be able to dry the inside of the reagent refrigerator 1.

### Fourth Embodiment

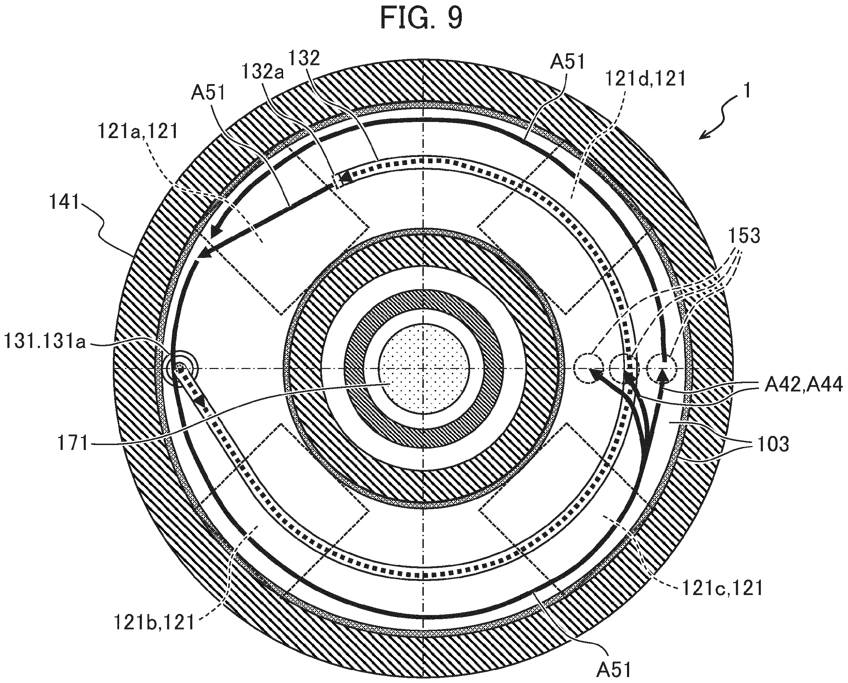

Next, a fourth embodiment will be described with reference to Fig. 9.

Fig. 9 is a horizontal cross-sectional view of a reagent refrigerator 1 according to a fourth embodiment, illustrating flows of warm air in the third embodiment. Fig. 9 is a diagram corresponding to a cross section taken along line B-B in Fig. 7. In Fig. 9, the same structures as those in Fig. 8 are denoted by the same reference signs as those in Fig. 8, parts different from those of the reagent refrigerator 1 described in the third embodiment will be described and a description of duplicate parts is omitted.

In the fourth embodiment, in a reagent refrigerator 1, a pipe discharge port 132a on the most downstream side of a pipe 132 is located near a heat exchanger 121a. In the example illustrated in Fig. 9, the pipe discharge port 132a is located near the heat exchanger 121a, but may be located near any one of heat exchangers 121b to 121d.

In an analysis process, the temperature of the heat exchanger 121a is set to be lower than those of the other heat exchangers 121b to 121d. In addition, in the analysis process, outside air (cold air) discharged from the pipe discharge port 132a first passes through an upper portion of the heat exchanger 121a. Therefore, the outside air (cold air) discharged from the pipe discharge port 132a is cooled more than a surface of an inner wall 103 on the other heat exchangers 121b to 121d and diffused into the reagent refrigerator 1. That is, the temperature of a surface of the inner wall 103 located on the heat exchanger 121a and air above the surface are lower than the temperature of a surface of the inner wall 103 located on the heat exchangers 121b to 121d and air located above the surface. As a result, it becomes possible to limit and narrow a region where condensation occurs to a region around the upper portion of the heat exchanger 121a.

On the other hand, similarly to the third embodiment, in a drying process, outside air introduced into the pipe 132 by an air blower 133 (see Fig. 7) passes over the heat exchangers 121b to 121d and is discharged as warm air from the pipe discharge port 132a. In this case, the heat exchangers 121a to 121d are heated to similar degrees. As described above, occurrence of condensation is concentrated on the inner wall 103 around the location where the heat exchanger 121a is installed. Therefore, condensation that has occurred around the heat exchanger 121a can be actively dried by the warm air (arrow A51) discharged from the pipe discharge port 132a and heat of the inner wall 103 by the heat exchanger 121a. The warm air (arrow A51) discharged from the pipe discharge port 132a becomes air flow similar to that in the third embodiment and circulates in the reagent refrigerator 1. In addition, it is possible to dry droplets caused by condensation that has occurred on the inner wall 103 by heating the inner wall 103 by the heat exchanger 121a.

In the drying process, it is possible to remove droplets by drying more quickly and efficiently by setting the temperature of the heat exchanger 121a to be higher than those of the other heat exchangers 121b to 121d. Similarly to the third embodiment, according to the fourth embodiment, the inside of the reagent refrigerator 1 can be dried without disassembling the automatic analyzer 200 for long-term storage in field maintenance and introducing warm air by a heating device from the outside.

In the fourth embodiment, a similar effect can be obtained by shortening the distance in a thickness direction between the periphery of a mounting surface of the heat exchanger 121a and a bottom surface of the inner wall 103 compared to installation parts of the other heat exchangers 121b to 121d. That is, the heat exchanger 121a may be installed closer to the bottom surface of the inner wall 103 than the other heat exchangers 121b to 121d. In this case, in the analysis process, a similar effect to that of the structure illustrated in Fig. 9 can be obtained without setting the temperature of the heat exchanger 121a to be lower than those of the heat exchangers 121b to 121d.

In the fourth embodiment, a cover may be disposed on the inner wall 103 near the upper portion of the heat exchanger 121a from the pipe discharge port 132a. In this structure, a region in which condensation occurs can be more limited, and droplets can be removed efficiently in the drying process.

In the three and the fourth embodiments, the inner wall 103 may be inclined toward the upper opening portion 131a. In this case, droplets that occur due to condensation during the cooling can be caused to flow toward the drain 131 and can be efficiently removed.

### Diagram of Hardware Structure of Control Device 301

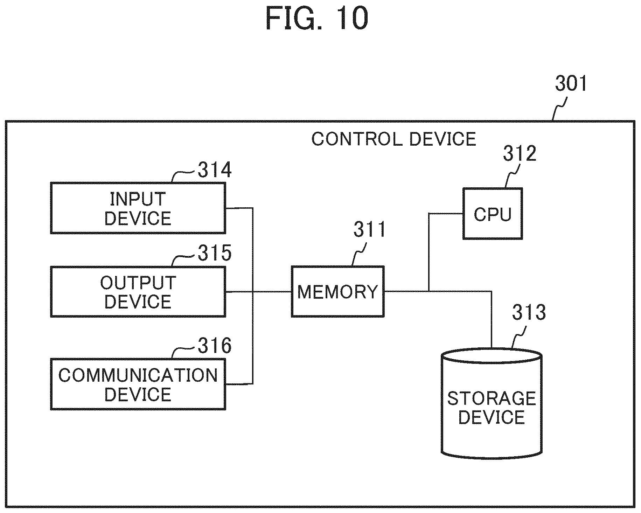

Fig. 10 is a diagram of a hardware structure of the control device 301 used in the first to fourth embodiments. Fig. 1 will be referred to as appropriate.

The control device 301 is comprised of a personal computer (PC) or the like and includes a memory 311, a central processing unit (CPU) 312, and a storage device 313 including a hard disk (HD), a solid state drive (SSD), and the like. The control device 301 further includes an input device 314 such as a keyboard or a mouse, an output device 315 such as a display, and a communication device 316. The communication device 316 receives temperature information of the reagent refrigerator 1 (see Fig. 1) from the temperature control device 302 (see Fig. 1) and transmits a control signal for controlling each component of the automatic analyzer 200.

A program is stored in the storage device 313. This program is loaded into the memory 311. The loaded program is executed by the CPU 312 to implement functions of controlling each component of the automatic analyzer 200 and computing a result of detection by the automatic analyzer 200.

The present invention is not limited to the embodiments and includes various modifications. For example, the embodiments are described in detail to easily explain the present invention and are not necessarily limited to all the structures described. In addition, some of structures in a certain embodiment can be replaced with a structure in another embodiment. A structure in a certain embodiment can be added to a structure in another embodiment. Furthermore, it is possible to add, remove, or replace some of the structures in each embodiment with other structures.

Some or all of the above-described structures, functions, and components, the storage device 313, and the like may be implemented in hardware by designing, for example, an integrated circuit or the like. In addition, as illustrated in Fig. 10, the above-described structures, functions, and the like may be implemented in software by a processor such as the CPU 312 interpreting and executing a program for implementing the functions. Information of the program for implementing the functions, a table, a file, and the like can be stored in the memory 311, a storage device such as an SSD, an integrated circuit (IC) card, a secure digital (SD) card, and a storage medium such as a digital versatile disc (DVD), in addition to being stored in the HD.

In addition, in each of the embodiments, control lines and information lines are those considered necessary for explanation, and not all control lines and information lines in products may not be necessarily shown. Almost all structures are considered to be connected to one another. List of Reference Signs

1: reagent refrigerator
101: reagent disc
101A: first surface (first surface)
102B: second surface (second surface)
102: reagent container holder
103: inner wall
104: opening hole (hole)
105: recess portion
106: partition portion
121: heat exchanger
121a: heat exchanger (first heat exchanger)
121b to 121d: heat exchanger (second heat exchanger)
132: pipe
132a: pipe discharge port (end portion)
141: heat insulation material (heat insulation structure)
150: lid (heat insulation structure, first lid)
151: opening/closing portion (opening)
152: openable lid (heat insulation structure)
153: reagent aspiration hole
160: warm air blower lid (second lid)
161: through hole
200: automatic analyzer
202: reagent dispending section
202a: reagent dispending nozzle (reagent aspiration nozzle)
301: control device
302: temperature control device
A1: arrow (warm air introduced to the inside of the reagent refrigerator at a predetermined angle)
A2, A3, A21 to A24, A31, A32, A41 to A45, A51: arrow (warm air circulating inside the reagent refrigerator)
S1: gap space (space formed between the bottom surface of the inner wall and the reagent disc by a predetermined distance)
S2: gap space (predetermined distance)
S3: gap space (space formed between the second surface and the first lid)
S4: gap space (predetermined distance)

## Claims

1. A method for drying reagent refrigerator with a heat insulation structure for storing a plurality of reagent containers each containing a reagent while having the reagent containers kept cold, comprising
flowing a warm air at a temperature higher than a temperature in the reagent refrigerator circularly in the reagent refrigerator.

2. The method for drying reagent refrigerator according to claim 1, wherein
by introducing the warm air at a temperature higher than a temperature in the reagent refrigerator into the reagent refrigerator, at a predetermined angle with respect to a horizontal direction from an opening portion for putting the reagent containers in and taking the reagent containers out from the reagent refrigerator,
the warm air at a temperature higher than a temperature in the reagent refrigerator flows circularly in the reagent refrigerator.

3. The method for drying reagent refrigerator according to claim 2, wherein
the reagent refrigerator includes:
a reagent disc forming a reagent container holder that is a space for storing the reagent containers;
an inner wall disposed outside of the reagent disc viewed from the reagent container holder while keeping a predetermined distance from the reagent disc; and
a first lid closing the reagent disc and an upper part of the inner wall,
the reagent disc includes:
a hole in a portion forming a bottom surface of the reagent container holder;
a first surface forming a portion of the reagent container holder and extending along a vertical direction; and
a second surface connected to the first surface at an upper part of the first surface and formed along a horizontal direction toward a center axis of the reagent refrigerator, wherein
a space is formed between the second surface and the first lid,
the first lid includes:
a reagent aspiration hole into which a reagent aspiration nozzle, inserted for aspirating the reagent; and
an openable lid opening and closing an opening portion for putting the reagent containers in and taking the reagent containers out from the reagent refrigerator, and,
by introducing the warm air at a predetermined angle from the opening portion so that the warm air is introduced to a connection portion where the first surface and the second surface are connected from the opening portion and branches into warm air along the first surface and warm air along the second surface, which results in the warm air flows circularly in the reagent refrigerator,
the warm air at a temperature higher than a temperature in the reagent refrigerator flows.

4. The method for drying reagent refrigerator according to claim 3, wherein
a second lid different from the openable lid is disposed on the opening portion, and
a through hole is disposed in the second lid such that the warm air is introduced to the connection portion where the first surface and the second surface are connected, at the predetermined angle.

5. The method for drying reagent refrigerator according to claim 1, wherein
a heat exchanger capable of switching cooling operation and heating operation is disposed in the reagent refrigerator, and
the warm air at a temperature higher than a temperature in the reagent refrigerator so that the warm air flows circularly in the reagent refrigerator by performing the heating operation by the heat exchanger.

6. The method for drying reagent refrigerator according to claim 5, wherein
the reagent refrigerator includes:
the heat insulation structure;
a reagent disc forming a reagent container holder that is a space for storing the reagent containers;
an inner wall disposed outside of the reagent disc viewed from the reagent container holder while keeping a predetermined distance from the reagent disc;
a first lid closing the reagent disc and an upper part of the inner wall, wherein
the reagent disc includes:
a hole in a portion forming a bottom surface of the reagent container holder; and
a space formed between the reagent disc and the first lid,
the first lid includes:
a reagent aspiration hole into which a reagent aspiration nozzle is inserted for aspirating the reagent; and
an openable lid opening and closing an opening portion for putting the reagent containers in and taking the reagent containers out from the reagent refrigerator;
a plurality of the heat exchangers disposed opposite to the reagent disc with respect to a bottom surface of the inner wall; and
a pipe in which outside air flows disposed in a space formed between the bottom surface of the inner wall and the reagent disc and is disposed to pass over the heat exchanger; and
an end of the pipe from which the outside air is discharged, disposed in a space formed between the bottom surface of the inner wall and the reagent disc, and
by performing the heating operation by the heat exchanger under the situation where the opening potion is closed,
the warm air at the temperature higher than the temperature in the reagent refrigerator flows so that the warm air flows circularly in the reagent refrigerator.

7. The method for drying reagent refrigerator according to claim 6, wherein
the pipe is disposed to pass over all of the plurality of heat exchangers.

8. The method for drying reagent refrigerator according to claim 6, wherein
the plurality of heat exchangers include a first heat exchanger and a second heat exchanger that is the heat exchanger other than the first heat exchanger,
a temperature of the first heat exchanger is set to be lower than a temperature of the second heat exchanger,
the pipe is disposed to pass over the entire range of the second heat exchanger, and is disposed not to pass over the first heat exchanger, and
by disposing the end of the pipe from which the outside air is discharged, adjacent to the second heat exchanger,
the warm air at the temperature higher than the temperature in the reagent refrigerator flows so that the warm air flows circularly in the reagent refrigerator.

9. The method for drying reagent refrigerator according to claim 1, wherein
the reagent refrigerator includes a reagent disc forming a reagent container holder that is a space for storing the reagent containers,
the reagent container holder is partitioned by a partition portion, and
a recess portion is formed in an upper part of the partition portion.

## Amended claims

### Amended claims under Art. 19.1 PCT

1. (Amended) A method for drying reagent refrigerator with a heat insulation structure for storing a plurality of reagent containers each containing a reagent while having the reagent containers kept cold, wherein
the reagent refrigerator includes:
a reagent disc forming a reagent container holder that is a space for storing the reagent containers;
an inner wall disposed outside of the reagent disc viewed from the reagent container holder while keeping a predetermined distance from the reagent disc; and
a first lid closing the reagent disc and an upper part of the inner wall, wherein
the reagent disc includes:
a hole in a portion forming a bottom surface of the reagent container holder;
a first surface forming a portion of the reagent container holder and extending along a vertical direction; and,
a second surface connected to the first surface at an upper part of the first surface and formed along a horizontal direction toward a center axis of the reagent refrigerator, wherein
a space is formed between the second surface and the first lid,
the first lid includes:
a reagent aspiration hole into which a reagent aspiration nozzle is inserted for aspirating the reagent; and
an openable lid opening and closing an opening portion for putting the reagent containers in and taking the reagent containers out from the reagent refrigerator, and,
by introducing warm air at a temperature higher than a temperature in the reagent refrigerator into the reagent refrigerator from the opening portion, at a predetermined angle with respect to the horizontal direction, so that the warm air is introduced to a connection portion where the first surface and the second surface are connected and the warm air branches into warm air along the first surface and warm air along the second surface,
the warm air at a temperature higher than a temperature in the reagent refrigerator flows circularly in the reagent refrigerator.

2. (Amended) A method for drying reagent refrigerator with a heat insulation structure for storing a plurality of reagent containers each containing a reagent while having the reagent containers kept cold, , wherein
the reagent refrigerator includes:
a reagent disc forming a reagent container holder that is a space for storing the reagent containers;
an inner wall disposed outside of the reagent disc viewed from the reagent container holder while keeping a predetermined distance from the reagent disc; and
a first lid closing the reagent disc and an upper part of the inner wall, wherein
the reagent disc includes:
a hole in a portion forming a bottom surface of the reagent container holder;
a first surface forming a portion of the reagent container holder and extending along a vertical direction; and,
a second surface connected to the first surface at an upper part of the first surface and formed along a horizontal direction toward a center axis of the reagent refrigerator, wherein
a space is formed between the second surface and the first lid,
the first lid includes:
a reagent aspiration hole into which a reagent aspiration nozzle is inserted for aspirating the reagent; and
an openable lid opening and closing an opening portion for putting the reagent containers in and taking the reagent containers out from the reagent refrigerator, and,
by introducing the warm air at a temperature higher than a temperature in the reagent refrigerator into the reagent refrigerator, at a predetermined angle with respect to a horizontal direction from an opening portion for putting the reagent containers in and taking the reagent containers out from the reagent refrigerator, so that the warm air is introduced to the connection portion where the first surface and the second surface are connected and the warm air branches into warm air along the first surface and warm air along the second surface,
the warm air at a temperature higher than a temperature in the reagent refrigerator flows circularly in the reagent refrigerator,
a second lid different from the openable lid is disposed on the opening portion, and
a through hole is disposed in the second lid, such that the warm air is introduced to the connection portion where the first surface and the second surface are connected, at the predetermined angle.

3. (Amended) A method for drying reagent refrigerator with a heat insulation structure for storing a plurality of reagent containers each containing a reagent while having the reagent containers kept cold, wherein
the reagent refrigerator includes:
a reagent disc forming a reagent container holder that is a space for storing the reagent containers;
an inner wall disposed outside of the reagent disc viewed from the reagent container holder while keeping a predetermined distance from the reagent disc;
a first lid closing the reagent disc and an upper part of the inner wall, and,
a heat exchanger capable of switching cooling operation and heating operation, wherein
the reagent disc includes:
a hole in a portion forming a bottom surface of the reagent container holder; and,
a space formed between the second surface and the first lid,
the first lid includes:
a reagent aspiration hole into which a reagent aspiration nozzle inserted for aspirating the reagent; and
an openable lid opening and closing an opening portion for putting the reagent containers in and taking the reagent containers out from the reagent refrigerator,
a plurality of the heat exchangers are disposed opposite to the reagent disc with respect to a bottom surface of the inner wall,
a pipe in which outside air flows is disposed in a space formed between the bottom surface of the inner wall and the reagent disc,
the pipe is disposed to pass over the heat exchangers,
an end of the pipe from which the outside air is discharged is disposed in a space formed between the bottom surface of the inner wall and the reagent disc, and,
by performing the heating operation by the heat exchanger under the situation where the opening potion is closed,
the warm air at a temperature higher than a temperature in the reagent refrigerator flows circularly in the reagent refrigerator.

4. (Amended) A method for drying reagent refrigerator with a heat insulation structure for storing a plurality of reagent containers each containing a reagent while having the reagent containers kept cold, wherein
the reagent refrigerator includes:
a reagent disc forming a reagent container holder that is a space for storing the reagent containers;
an inner wall disposed outside of the reagent disc viewed from the reagent container holder while keeping a predetermined distance from the reagent disc;
a first lid closing the reagent disc and an upper part of the inner wall; and
a heat exchanger capable of switching cooling operation and heating operation, wherein
the reagent disc includes:
a hole in a portion forming a bottom surface of the reagent container holder; and,
a space formed between the second surface and the first lid,
the first lid includes:
a reagent aspiration hole into which a reagent aspiration nozzle inserted for aspirating the reagent; and
an openable lid opening and closing an opening portion for putting the reagent containers in and taking the reagent containers out from the reagent refrigerator,
a plurality of the heat exchangers are disposed opposite to the reagent disc with respect to a bottom surface of the inner wall,
a pipe in which outside air flows is disposed in a space formed between the bottom surface of the inner wall and the reagent disc,
the pipe is disposed to pass over all of the plurality of heat exchangers,
an end of the pipe from which the outside air is discharged is disposed in a space formed between the bottom surface of the inner wall and the reagent disc,
by performing the heating operation by the heat exchanger under the situation where the opening potion is closed,
the warm air at a temperature higher than a temperature in the reagent refrigerator flows circularly in the reagent refrigerator.

5. (Amended) A method for drying reagent refrigerator with a heat insulation structure for storing a plurality of reagent containers each containing a reagent while having the reagent containers kept cold, wherein
the reagent refrigerator includes:
a reagent disc forming a reagent container holder that is a space for storing the reagent containers;
an inner wall disposed outside of the reagent disc viewed from the reagent container holder while keeping a predetermined distance from the reagent disc;
a first lid closing the reagent disc and an upper part of the inner wall; and
a heat exchanger capable of switching cooling operation and heating operation, wherein
the reagent disc includes:
a hole in a portion forming a bottom surface of the reagent container holder; and
a space formed between the reagent disc and the first lid,
the first lid includes:
a reagent aspiration hole into which a reagent aspiration nozzle is inserted for aspirating the reagent; and
an openable lid opening and closing an opening portion for putting the reagent containers in and taking the reagent containers out from the reagent refrigerator;
a plurality of the heat exchangers disposed opposite to the reagent disc with respect to a bottom surface of the inner wall,
a pipe in which outside air flows is disposed in a space formed between the bottom surface of the inner wall and the reagent disc,
the plurality of heat exchangers include a first heat exchanger and a second heat exchanger that is the heat exchanger other than the first heat exchanger,
a temperature of the first heat exchanger is set to be lower than a temperature of the second heat exchanger,
the pipe is disposed to pass over the entire range of the second heat exchanger, and an end of the pipe from which the outside air is discharged is disposed not to pass over the first heat exchanger,
the end of the pipe from which the outside air is discharged, disposed in a space formed between the bottom surface of the inner wall and the reagent disc, and
by performing the heating operation by the heat exchanger under the situation where the opening potion is closed, and,
by disposing the end of the pipe from which the outside air is discharged, adjacent to the second heat exchanger,
the warm air at a temperature higher than a temperature in the reagent refrigerator.

6. (Amended) The method for drying reagent refrigerator according to claim 1, wherein
the reagent refrigerator includes a heat exchanger capable of switching cooling operation and heating operation and
by performing the heating operation by the heat exchanger,
the warm air flows circularly in the reagent refrigerator.

7. (Cancelled)

8. (Cancelled)

9. (Amended) The method for drying reagent refrigerator according to claim 1, wherein
the reagent container holder is partitioned by a partition portion, and
a recess portion is formed in an upper part of the partition portion.

## Amended claims

### Amended claims under Art. 19.1 PCT

1. is amended by making it as an independent claim and by incorporating the subject matter of original claim 3 that is recognized as having inventive steps in the international search report.

2. is amended by making it as an independent claim and by incorporating the subject matter of original claim 4 that is recognized as having inventive steps in the international search report.

3. is amended by making it as an independent claim and by incorporating the subject matter of original claim 6 that is recognized as having inventive steps in the international search report.

4. is amended by making it as an independent claim and by incorporating the subject matter of original claim 4 that is recognized as having inventive steps in the international search report.

5. is amended by making it as an independent claim and by incorporating the subject matter of original claim 8 that is recognized as having inventive steps in the international search report.

6. is amended by depending on claim 1 and by incorporating the subject matter of original claim 5.
